# EUROPEAN PATENT SPECIFICATION

(11) **EP 0 778 279 B1**
(45) Date of publication and mention of the grant of the patent: **24.03.2004**
(21) Application number: 96119470.1
(22) Date of filing: 04.12.1996
(51) Int. Cl.: C07F 7/16

(54) **Method for controlling the direct process product distribution**
Verfahren zur Überwachung der Verteilung der Reaktionsprodukte bei der Alkylhalogensilanherstellung
Procédé pour agir sur la distribution des produits de la synthèse directe des alkylhalogénosilanes

(30) Priority: 05.12.1995 US 567652
(43) Date of publication of application: 11.06.1997
(73) Proprietor: DOW CORNING CORPORATION, Midland, Michigan 48686-0994 (US)
(72) Inventor: Halm, Roland Lee, Midland, Michigan 48640 (US); Kuivila, Charles Spencer, Crestwood, Kentucky 40014 (US); Wilding, Oliver K., Lagrange, Kentucky 40031 (US)
(74) Representative: Spott, Gottfried, Dr.

(56) References cited:
- EP-A- 0 604 092
- EP-A- 0 647 646
- EP-A- 0 760 371
- EP-A- 0 776 697
- EP-A- 0 858 833
- US-A- 4 602 371
- US-A- 4 962 220
- US-A- 4 966 986
- US-A- 5 059 706
- US-A- 5 281 739

## Description

The present invention is a method for controlling the direct process product distribution to vary the concentrations of trialkylhalosilanes and alkyltrihalosilanes in the product. The method comprises contacting an alkyl chloride with silicon metalloid in the presence of a catalytic amount of a catalyst comprising 0.5 to 10 weight percent copper, 5 to 200 ppm tin, 25 to 2,500 ppm phosphorous, and greater than zero to less than 50 ppm zinc, where the concentration of each of the catalyst components is based on the weight of silicon, at a temperature within a range of 250°C. to 400°C. We have found that by controlling the zinc concentration the concentrations of trialkylhalosilanes and alkyltrihalosilanes in the product are varied. The present method is especially useful for increasing the concentration of trialkylhalosilane in the product.

Our invention involves a modification of the direct process for producing alkylhalosilanes. This process comprises contacting an alkyl halide with particulate silicon in the presence of a copper catalyst. The process was first described by Rochow in US Patents 2,380,995 and 2,380,996.

Since Rochow, the process has been refined and modified in numerous ways and is now used for producing virtually all commercial alkylhalosilanes in the world. When one considers that several million pounds of silanes are produced annually and consumed by silicone commercial efforts, it is apparent that even small changes in the product distribution from the direct process are important.

Commercially, the largest volume alkylhalosilane manufactured is dimethyldichlorosilane, since this alkylhalosilane constitutes the backbone of most high volume commercial silicone products, after it has been hydrolyzed and condensed to form silicone polymers. Therefore, most efforts in optimizing the direct process have been directed toward obtaining the highest yield of this dialkyldihalosilane. At times commercial demand for other alkylhalosilanes, particularly trialkylhalosilane exceeds what is currently produced in the optimized process for dialkyldihalosilanes. Current processes, such as redistribution of dialkyldihalosilane to form trialkylhalosilane and alkyltrihalosilane, are expensive to perform making then commercially unattractive. Our claimed process provides a method for controlling the direct process to vary the concentration of trialkylhalosilane and alkyltrihalosilane in the product; thereby making the amounts of trialkylhalosilane and alkyltrihalosilane in the product more appropriately match commercial demand.

Representative of the prior art is U.S. Reissue Patent 33,452 or U.S. Patents 4,602,101 and 5,312,948.

The above described art does not teach conduct of the direct process in the presence of a catalyst mixture providing on an elemental basis by weight 0.1 to 10 weight percent copper, 5 to 200 ppm tin, 25 to 2,500 ppm phosphorous, and greater than zero to less than 50 ppm zinc, where the concentration of each of the catalyst components is based upon the weight of silicon in the process. Furthermore, the described art does not recognize that the concentration of zinc in the direct process can be exploited as a method of varying the concentration of trialkylhalosilane and alkyltrihalosilane in the product.

The present invention is a process for making alkylhalosilanes. The process comprises: contacting an alkyl halide with silicon metalloid in the presence of a catalyst comprising 0.5 to 10 weight percent copper, 5 to 200 ppm tin, 25 to 2,500 ppm phosphorous, and greater than zero to less than 50 ppm zinc, where the concentration of each of the catalyst components is based on the weight of the silicon, at a temperature within a range of 250°C. to 400°C. In our process, the zinc concentration is controlled within a defined range as a means of varying the concentration of trialkylhalosilane and alkyltrihalosilane in the product.

Alkylhalosilanes that are made by the present process are described by formula RₐH_{b}SiX_{4-a-b} (1). In formula (1), each substituent R is independently selected from alkyls comprising one to four carbon atoms. The substituent R is, for example, methyl, ethyl, propyl, isopropyl, butyl and tert-butyl. In formula (1), subscript a has a value of zero, one, two, three or four; subscript b has a value of zero, one or two; and the sum of terms a and b is one, two, three or four. In formula (1) the substituent X is a halogen atom. Preferred is when X is chlorine. The preferred alkylhalosilanes are those in which subscript a has a value of one, two or three and subscript b is zero. Also preferred is where in formula (1) R is methyl and X is chlorine. Our most preferred alkylhalosilanes are trimethylchlorosilane, dimethyldichlorosilane and methyltrichlorosilane.

In the present process an alkyl halide is contacted with silicon. Alkyl halides useful in this process are described by formula RX (2) where R and X are as previously described. Preferred is where the substituent X of the alkyl halide is chlorine. The preferred alkyl halide is therefore methyl chloride.

The present process is carried out as a batch process or a continuous process in standard reactors for reacting silicon with alkyl halides. The process is conducted, for example, in a fluidized-bed reactor, a stirred-bed reactor or a vibrating-bed reactor.

It is preferred that contact of the alkyl halide with the silicon be effected in a fluidized-bed of particulate silicon. The process is conducted in standard type reactors for reacting a fluidized-bed of particulates with a gas. The bed is fluidized using the alkyl halide as the fluidizing media or by using a mixture of the alkyl halide with a gas inert in our process as the fluidized media.

The silicon useful in this process is any silicon having a purity of at least 95% by weight, but less than 100% by weight, of silicon. The preferred silicon is a metallurgical grade silicon having greater then 98%, but less than 100% by weight, of silicon. A silicon copper alloy, as described in U.S. Patent, 5,281,739 is an example of a useful silicon for the present process.

In our process, it is preferred that the silicon be a powder having an average particle size ranging from 0.1 micron to 800 µm. A preferred average particle size for silicon is from 0.1 to 150 µm. Even more preferred is a particulate silicon having a mass distribution as claimed in U.S. Patent 5,312,948.

The claimed process is conducted in the presence of a catalyst comprising 0.5 to 10 weight percent of copper, based on the weight of silicon present in the process, i.e. in the reaction mass. Preferred is when the catalyst comprises 3 to 5 weight percent copper, based on the weight of the silicon. The source of copper added may be, for example, powdered copper metal, powdered silicon-copper alloy, a compound of copper or a mixture of two or more sources of copper. A convenient copper compound is, for example, cuprous chloride.

In this process, the catalyst must comprise 5 to 200 ppm of tin, based on the weight of the silicon present in the process. Preferred is when the catalyst comprises 40 to 80 ppm tin, based on the silicon weight. The source of tin can be, for example, tin metal powder. Another source of tin is a tin compound, such as tin halides (e.g., tetramethyltin, alkyl tin halides and tin oxide).

In our inventive process, the catalyst must also include 25 to 2,500 ppm of phosphorous, based on the weight of the silicon present in this process. Preferred is when the catalyst comprises 50 to 1,000 ppm phosphorous, based on the weight of the silicon. The source of phosphorous is selected from elemental phosphorous, metal phosphides and compounds forming metal phosphides in the reaction mass of our process. Such sources of phosphorous are described in U.S. Patent 4,602,101. The source of phosphorous can also be gaseous phosphorous compounds as described in U.S. Patent 5,059,706.

The present process must include greater than zero to less than 50 ppm of zinc, based on the weight of silicon present in the process. The source of zinc is, for example, zinc metal, halides of zinc, such as zinc chloride or zinc oxide. The source of zinc can also be an alloy such as brass.

We have unexpectedly found that varying the level of zinc within our process provides a method for varying the amount of trialkylhalosilane and alkyltrihalosilane in the product mixture. We have also found that as the zinc concentration is decreased the amount of trialkylhalosilane and alkyltrihalosilane in the reaction product is increased. Even more unexpected is our finding that a disproportionate increase in trialkylhalosilane occurred in relation to alkyltrihalosilane formed. Therefore, this process is particularly useful for controlling the amount of alkyltrihalosilane formed in the direct process and for providing a reaction product enriched in trialkylhalosilane.

Our catalyst comprising copper, tin, phosphorous and zinc is made by introducing the components into the reactor separately or as a mixture, masterbatch, alloy or blend of two or more of these components in elemental form and as compounds or mixtures thereof.

The present process is conducted at a temperature within a range of 250°C. to 400°C. The preferred temperature for conducting our process is from 260°C. to 320°C. Even more preferred is a temperature within a range of 280°C. to 320°C.

### Examples

The effect of varying the zinc concentration on methylchlorosilane product distribution was evaluated in a series of runs. The runs were made in a vibrating-bed type reactor similar to that described in U.S. Patent 4,218,387, runs 1, 2, 3 and 5 being references. The reactor charges were prepared by combining 100 parts of refined, ground, metallurgical grade silicon with a catalyst package. The catalyst package comprised 6.5 parts of cuprous chloride, 50 ppm of tin, 2000 ppm of copper phosphide comprising 14 weight percent phosphorous and varying amounts of brass comprising 50 weight percent zinc, all concentrations based on the starting weight of silicon. The amount of zinc added for each run is described in Table 1. The silicon and catalyst package were mixed together by shaking. The charge was then placed in the reactor, which was closed and weighed to determine the initial weight. Nitrogen flow was initiated through the reactor and the reactor was next heated to 315°C. by means of a heated, fluidized sandbath. Methyl chloride gas was fed to the reactor for a total of 44 hours during which time all products and unreacted methyl chloride were collected in a cold-trap maintained below minus 40°C. Weight loss of the reactor was used as an indication of silicon conversion. The liquid collected in the cold-trap was analyzed by gas liquid chromatography (GLC) using a thermal conductivity (TC) detector. Reaction products detected by GLC-TC included dimethyldichlorosilane, trimethylchlorosilane, methyltrichlorosilane and other chlorosilanes at concentrations below 1 weight percent. Yield of the reaction products were calculated as weight percentages of the total chlorosilanes detected in the cold trap. Nominal yields of methylchlorosilane products for each run were calculated by multiplying the concentrations of the individual methylchlorosilane (weight percent) in the total chlorosilane product collected in the cold trap by the average fractional silicon conversion. With the exception of run 1 data, each of the data entries in Table 1 is an average result measured for a pair of reactors run simultaneously.

**Table 1**

| Effect of Zinc Concentration on Methylchlorosilane Products | | | | |
|---|---|---|---|---|
| | | Nominal Product Yields (%) | | |
| Run No. | Zinc (ppm) | Me₃SiCl | MeSiCl₃ | Me₂SiCl₂ |
| 1 (reference) | 300 | 1.5 | 3.0 | 78.8 |
| 2 (reference) | 90 | 2.1 | 3.5 | 78.1 |
| 3 (reference) | 50 | 2.7 | 4.4 | 76.3 |
| 4 | 25 | 2.9 | 4.5 | 76.7 |
| 5 (reference) | 0 | 3.0 | 5.0 | 75.1 |

## Claims

1. A process for making alkylhalosilanes, the process comprising:
contacting an alkyl halide with silicon metalloid in the presence of a catalyst comprising 0.5 to 10 weight percent of copper, 5 to 200 ppm of tin, 25 to 2,500 ppm of phosphorous and zinc of a range of greater than zero to less than 50 ppm, where the concentration of each of the catalyst components is based on the weight of the silicon, at a temperature within a range of 250°C to 400°C, wherein the zinc concentration is controlled within said range for varying the concentration of. trialkylhalosilane and alkyltrihalosilane in the alkylhalosilane product.

2. A process according to claim 1, where the alkyl halide is methyl chloride.

3. A process according to claim 1, where the catalyst is heat activated at a temperature within a range of 270°C to 350°C prior to contact with the alkyl halide.

4. A process according to claim 1, where at least a portion of the zinc is added to the process as brass.

## Patentansprüche

1. Verfahren zur Herstellung von Alkylhalogensilanen, wobei das Verfahren die folgenden Stufen umfasst:
Inberührungbringen eines Alkylhalogenids mit Siliciummetalloid in Gegenwart eines Katalysators, der 0,5 bis 10 Gew.-% Kupfer, 5 bis 200 ppm Zinn, 25 bis 2.500 ppm Phosphor und Zink in einem Bereich von mehr als 0 bis weniger als 50 ppm umfasst, wobei die Konzentration einer jeden der Katalysatorkomponenten auf das Gewicht des Siliciums bezogen ist, bei einer Temperatur im Bereich von 250° bis 400°C, wobei die Zinkkonzentration in dem genannten Bereich gesteuert wird, um die Konzentration des Trialkylhalogensilans und Alkyltrihalogensilans in dem Silanprodukt zu verändern.

2. Verfahren nach Anspruch 1, wobei das Alkylhalogenid Methylchlorid ist.

3. Verfahren nach Anspruch 1, wobei der Katalysator auf eine Temperatur in einem Bereich von 270°C bis 300°C wärmeaktiviert wird, bevor er mit dem Alkylhalogenid in Berührung gebracht wird.

4. Verfahren nach Anspruch 1, wobei mindestens ein Teil des Zinks dem Verfahren als Messing zugegeben wird.

## Revendications

1. Procédé pour la fabrication d'alkylhalogénosilanes, ce procédé comprenant :
la mise en contact d'un halogénoalcane avec du silicium métalloïdique en présence d'un catalyseur comprenant 0,5 à 10 % en masse de cuivre, 5 à 200 ppm d'étain, 25 à 2 500 ppm de phosphore et du zinc dans la plage entre supérieur à zéro et inférieur à 50 ppm, la concentration de chacun des composants du catalyseur étant exprimée par rapport à la masse de silicium, à une température dans la plage de 250°C à 400°C, où la concentration en zinc est maintenue dans ladite plage pour faire varier la concentration de trialkylhalogénosilane et d'alkyltrihalogénosilane dans l'alkylhalogénosilane produit.

2. Procédé selon la revendication 1, où l'halogénoalcane est le chlorométhane.

3. Procédé selon la revendication 1, où le catalyseur est activé thermiquement à une température dans la plage de 270°C à 350°C avant contact avec l'halogénoalcane.

4. Procédé selon la revendication 1, où au moins une portion du zinc est ajoutée au procédé sous la forme de laiton.
